# FASCICULE DE BREVET EUROPEEN

(11) **EP 2 076 375 B1**
(45) Date de publication et mention de la délivrance du brevet: **06.07.2011**
(21) Numéro de dépôt: 07821504.3
(22) Date de dépôt: 18.10.2007
(51) Int. Cl.: B29C 53/66, B29C 70/38, B29C 53/84

(54) **PROCEDE ET DISPOSITIF DE BOBINAGE FILAMENTAIRE**
VERFAHREN UND VORRICHTUNG ZUR FASERUMWICKLUNG
METHOD AND DEVICE FOR FILAMENT WINDING

(30) Priorité: 20.10.2006 FR 0654422
(43) Date de publication de la demande: 08.07.2009
(73) Titulaire: Astrium SAS, 75016 Paris (FR)
(72) Inventeur: GIRAUD, Gérard, 33138 Lanton (FR); COLIN, Christophe, 33160 St Medard En Jalles (FR)
(74) Mandataire: Schmit, Christian Norbert Marie
(86) Numéro de dépôt international: PCT/EP2007/061139
(87) Numéro de publication internationale: WO 2008/046879

(56) Documents cités:
- FR-A- 2 882 681

## Description

La présente invention concerne un procédé et un dispositif de bobinage filamentaire adaptés aux procédés de réalisation de récipients, de réservoirs ou d'objets de révolution tels que des poteaux, des arbres de transmission ou des bielles de renfort par bobinage de filaments de fibres.

Les procédés de bobinage consistent, de façon générale, à déposer un fil en continu pour réaliser des nappes de fils, imprégnés d'une résine sur un mandrin par bobinage puis à faire polymériser la résine pour réaliser les objets bobinés, ainsi qu'il est connu de FR2882681A.

Les fils utilisés sont réalisés en particulier à partir de filaments dont la longueur peut atteindre plusieurs kilomètres et dont le diamètre est de l'ordre de la dizaine de microns.

Ces filaments sont regroupés par paquets de plusieurs milliers qui constituent le produit disponible commercialement en tant que fibre, fil ou mèche.

Lors du bobinage, le mandrin est mis en rotation en sorte de dérouler le fil à partir de bobines où il est préalablement stocké.

Le ou les fils mis en oeuvre constituent la nappe de bobinage par l'opération de bobinage.

Plusieurs fils peuvent être bobinés simultanément, les fils étant mis en oeuvre indépendamment les uns des autres réalisant autant de chemins de fils en parallèle que de fils dans la nappe.

Cette technologie est particulièrement adaptée à la réalisation de corps creux, tubes ou réservoirs et en particulier de réservoirs étanches résistant à de fortes pressions.

Cette technique est en particulier utilisée pour réaliser un grand nombre de structures creuses telles que des réservoirs d'ergols de satellites, des bonbonnes d'air comprimé pour la plongée sous-marine, des réservoirs de traitement des eaux de piscines ou des cuves viticoles ou tout type de récipients légers résistants à la pression.

Un exemple de réservoir réalisé avec un tel procédé de bobinage est par exemple décrit dans le document FR2 824 892 A1 au nom de la demanderesse.

Le document FR2 705 655 A1 toujours au nom de la demanderesse décrit pour sa part une machine pour le bobinage simultané d'une pluralité de fils individuels déposés au contact selon le procédé énoncé ci-dessus.

Les fibres utilisées pour réaliser les fils sont les fibres industrielles usuelles telles que des fibres de verre, de silice, de carbone, de carbure de silicium minéral ou des fibres organiques de type PBO, polyester, propylène ou autres.

Ces fibres sont formées sous forme de filaments de très grande longueur (plusieurs kilomètres) et de très faible diamètre (quelques microns), ces filaments étant regroupés au sein de mèches ou fils comportant plusieurs milliers de filaments.

Les résines utilisées pour solidariser les fils bobinés en nappes sont des résines polymères telles que les résines époxy, polyester, acrylique, polyamide ou autre.

Des résines thermodurcissables, initialement liquides et subissant une opération de polymérisation, ou des résines thermoplastiques, polymérisées avant usage et rendues fluides par chauffage, peuvent être indifféremment utilisées dans les procédés de dépose.

Toutefois, pour les pièces à très hautes performances qui utilisent des matériaux composites sous forme de fils bobinés, avec un rendement de fibre au moins égal à 50%, c'est à dire que la pièce réalisée est susceptible de tenir à une sollicitation de près de 50% ou plus de la charge de rupture cumulée de chacun des fils, charge de rupture théorique idéale pour laquelle la pièce aurait une charge de rupture directement liée à la charge de rupture des fils et du nombre de fils, les résines thermodurcissables sont préférées du fait que les rendements obtenus avec les fibres thermoplastiques sont en général inférieurs à ceux obtenus avec les fibres thermodurcissables et du fait que la mise en oeuvre des fibres thermoplastiques est plus complexe et différent.

En outre, a été constaté que tout manque de linéarité du fil ou torsion induit une chute drastique du rendement du bobinage obtenu. Les procédés de dépose doivent être en conséquence les plus précis possibles pour garantir une grande rectitude des fils déposés et garantir un rendement de fibre le plus haut possible.

Deux types de procédés de bobinages coexistent à ce jour, un procédé pour lequel des fibres sèches sont imprégnées de résine au moment de leur bobinage et un procédé pour lequel les fibres sont des fibres préalablement pré-imprégnées et commercialisées ainsi en bobines qui sont utilisées sans imprégnation complémentaire lors de l'opération de bobinage.

Le premier procédé, à base de fibres sèches imprégnées au moment de leur bobinage, procédé humide, est un procédé économique et ne nécessitant pas de précautions particulières pour le stockage des filaments de fibre.

Par contre, ce procédé est un procédé sale et un procédé pour lequel les filaments glissants sont difficiles à maîtriser lors de leur dépose et difficiles à positionner précisément pour réaliser un récipient homogène, la résine ayant en plus tendance à couler sur le mandrin de dépose et dans les locaux.

Ceci est du au fait que l'imprégnation doit, selon l'art antérieur être faite avec une résine fluide qui joue le rôle de lubrifiant pour les filaments et les fils constitués avec ces filaments, les fils ayant ainsi tendance à glisser soit sur leur support soit les uns par rapport aux autres ce qui limite la précision de la dépose.

Un exemple d'un tel procédé, procédé humide, (procédé "wet" selon la terminologie anglo-saxonne) est illustré par le document US 5 585 414.

Un autre exemple de ce premier procédé est donné par le document EP 0 642 416 A1 qui traite d'un double moyen de polymérisation actinique et thermique.

Ce document illustre le problème de la saleté du procédé wet du fait de la fluidité de la résine lors de l'imprégnation et propose des solutions qui consistent à jouer sur la polymérisation de cette résine par des moyens tels qu'une double polymérisation ou par des moyens d'activation de la polymérisation tels que des moyens thermiques ou lumineux.

Le second procédé est le procédé à base de fibres pré-imprégnées.

Ce procédé qui utilise une résine à fort pouvoir collant est plus propre et plus précis mais plus coûteux du fait que les filaments sont achetés pré-imprégnés et doivent être stockés dans des conditions maîtrisées particulières nécessitant en un contrôle de la température et de l'humidité du lieu de stockage et notamment un maintien des bobines en chambre froide à -18°C pour garantir une durée de vie de la résine de quelques mois.

Dans ce cadre, le document US 5 011 721 concerne un système à double polymérisation, afin de piloter au mieux la polymérisation lors de la dépose et de limiter les risques de polymérisation en stockage.

Ce document illustre la complexité de la fabrication des pré-imprégnés et donc leur coût et montre que la situation nécessite d'être améliorée.

Le document FR 2 862 655 A1 illustre pour sa part une formulation de résine d'imprégnation.

L'ensemble de ces documents montre que les améliorations apportées à ce jour sont complexes et ne sont donc pas totalement satisfaisante.

En ce qui concerne les applications des procédés de bobinage, il y a lieu de noter que le bobinage se fait sur un mandrin pris entre pointes sur une machine du type d'un tour.

Le contrôle de la dépose des fils est en rapport avec une telle précision et on conçoit aisément que le contrôle de la fluidité de la résine et de sa polymérisation soient critiques pour la dépose, qu'il s'agisse de la platitude des fils déposés, de leur rectitude et de l'absence de glissement des fils lors du dépôt.

La présente invention à pour premier objectif de combiner les avantages des technologies procédé humide et procédé à fibres pré-imprégnées à savoir:
- avoir un coût de bobinage similaire au procédé humide;
- bobiner avec une fibre ayant un fort pouvoir collant, comme pour le procédé à fibres pré-imprégnées, mais sans problème de péremption lors du stockage des fibres;
- imprégner juste avant le bobinage des fibres stockées sèches mais sans risquer de coulures de résine telles que dans le procédé humide;
- éviter la gestion d'une cinétique de polymérisation comme dans le procédé à base de fibres pré-imprégnées,
- garantir une dépose précise des fils sans risque de glissement, de défauts de rectitude et de positionnement des fils.

Dans ce but, l'invention propose un procédé de bobinage filamentaire comportant une étape de déroulement de fils formés à partir de filaments de fibres, une étape d'imprégnation des fils par de la résine et une étape de bobinage, qui comporte une étape d'adaptation de viscosité de la résine en vue de l'étape d'imprégnation, pour lequel l'étape d'imprégnation est réalisée sur les fils après déroulement avec une résine non polymérisée, fluidifiée par ladite étape d'adaptation de la viscosité, et qui comporte une étape d'augmentation de viscosité de la résine entre l'étape d'imprégnation et l'étape de bobinage.

De manière préférentielle, le procédé est un procédé en continu.

L'invention propose en outre un dispositif de bobinage filamentaire à partir de fils secs, comportant une bobine d'alimentation en fils secs réalisés à partir de filaments de fibres sèches, un bac, d'imprégnation des fils par de la résine, disposé en sortie de la bobine d'alimentation, et un mandrin de bobinage, pour lequel le bac d'imprégnation est chauffé et pour lequel des moyens de refroidissement des fils imprégnés sont disposés entre le bac d'imprégnation et le mandrin de bobinage.

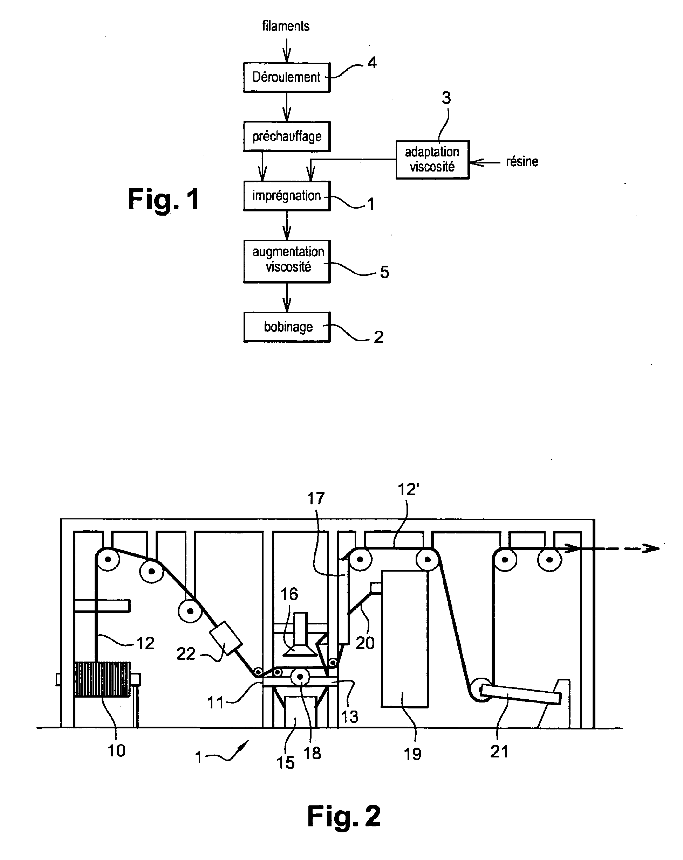

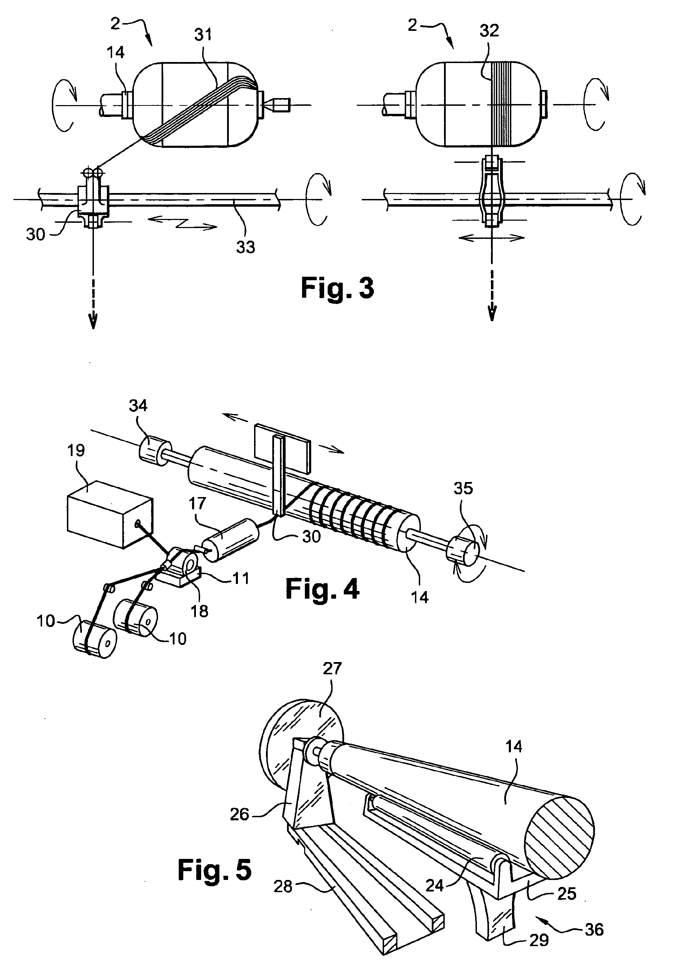

D'autres caractéristiques et avantages de l'invention seront apparents à la lecture de la description qui va suivre d'un exemple non limitatif de réalisation de l'invention en référence aux dessins annexés qui représentent:
en figure 1: un synoptique des étapes d'un procédé selon l'invention;
en figure 2: une vue schématique d'une première partie d'un exemple de réalisation d'un dispositif selon l'invention;
en figure 3: une vue de dessus d'un dispositif de bobinage, seconde partie du dispositif de la figure 2;
en figure 4: une vue en perspective schématique d'un dispositif selon l'invention;
en figure 5: une vue en perspective coupe du dispositif de bobinage de la figure 4.

L'enchaînement des étapes d'un procédé de bobinage filamentaire selon l'invention est schématisé à la figure 1.

Le procédé comporte pour commencer une étape 4 de déroulement de fils 12 réalisés à partir de filaments de fibres enroulés sur une bobine distributrice 10 représentée à la figure 2.

Le procédé détaillé à la figure 1 comporte ensuite une étape 1 d'imprégnation des fils par de la résine 13 de type résine thermodurcissable et une étape 2 de bobinage et comporte, selon l'invention, une étape 3 d'adaptation de viscosité de la résine en vue de l'étape d'imprégnation 1.

L'étape d'imprégnation est réalisée avec une résine non polymérisée sur les fils après leur déroulement.

La résine est fluidifiée par l'étape 3 d'adaptation de la viscosité qui comporte un chauffage de la résine.

Après l'étape d'imprégnation, et avant l'étape de bobinage 2, le procédé de l'invention comporte une étape 5 d'augmentation de viscosité de la résine.

Ainsi le procédé, qui comporte une fluidification de la résine pour l'imprégnation des fils et une augmentation de la viscosité de la résine pour le bobinage en sorte d'éviter les glissements des fils sur le mandrin, de conserver un positionnement précis de ces fils sur le mandrin, d'éviter l'essorage des filaments de fibres et en sorte de conserver l'espace de bobinage propre et exempt de coulures de résine, cumule les avantages des procédés antérieurs puisqu'il utilise des fibres sèches pour les fils comme dans le procédé wet et une résine visqueuse à température ambiante comme dans le procédé pré-imprégné.

Pour conserver les caractéristiques de la résine au long du procédé, l'étape d'adaptation de viscosité 3 est préférablement réalisée sans provoquer d'avancement de la polymérisation de la résine 13.

Pour cette étape, on part d'une résine de forte viscosité que l'on chauffe, à partir de la température ambiante, à une température au-dessous de la température de début de polymérisation.

Cette étape d'adaptation de viscosité de la résine a pour but de la fluidifier et la rendre compatible avec l'imprégnation de filaments de fils selon un taux de résine adapté de l'ordre de 30 à 35%. Elle comporte avantageusement une étape de refroidissement rapide des fils imprégnés 12' qui augmente la viscosité de la résine à une valeur adaptée au dépôt des fils imprégnés, notamment une valeur de viscosité de l'ordre de 500 000 mPa.s à 1 000 000 mPa.s.

Le refroidissement est notamment adapté à stopper tout début de polymérisation de la résine dans le cas où l'étape d'adaptation de viscosité aurait tendance à initier un début de polymérisation de la résine. Pour ce faire, pour l'étape de refroidissement rapide, le dispositif de l'invention prévoit des moyens de refroidissement 17 constitués par un tunnel de refroidissement faisant passer rapidement la résine d'une température de l'ordre de 70 à 75°C à la température ambiante.

Selon un mode de réalisation particulier du procédé, la résine utilisée est une résine d'une viscosité de l'ordre de 500 000 mPa.s à 1 000 000 mPa.s à température ambiante.

Pour permettre une bonne imprégnation des fibres, la résine est une résine d'une viscosité inférieure ou égale à 2000 mPa.s à une température supérieure ou égale à 30°C et préférablement une résine d'une viscosité inférieure ou égale à 2000 mPa.s à une température supérieure ou égale à 70°C

Ces différences de viscosité en fonction de la température permettent une bonne différentiation des conditions des étapes d'imprégnation, avec bonne fluidité de la résine et haute température, et de bobinage après refroidissement, avec une résine faiblement fluide.

Les résines utilisables sont en particulier des résines époxy, polyester ou vinylester respectant les critères de viscosité décrits précédemment

L'étape d'adaptation de la viscosité de la résine du procédé selon l'invention consiste à porter la résine à une température de l'ordre de 30 à 80°C et préférablement à porter la résine à une température de l'ordre de 70°C à 75°C pour la fluidifier.

Le dispositif de bobinage filamentaire à partir de fils secs réalisés à partir de filaments de fibres sèches selon l'invention est schématisé à la figure 2 pour la partie du dispositif permettant de réaliser les étapes du procédé comprenant le déroulement du fil, l'adaptation de viscosité de la résine, l'imprégnation et l'étape d'augmentation de la viscosité alors que la partie du dispositif permettant de réaliser l'étape de bobinage est décrite en figure 3.

Le dispositif représenté à la figure 2 comporte une bobine 10 d'alimentation en fils secs constitués de filaments de fibres sèches, un bac 11, d'imprégnation des fils par de la résine 13, disposé en sortie de la bobine d'alimentation, un module 22 de préchauffage des fils secs 12 avant imprégnation, de façon à ce que le fil ne refroidisse pas localement la résine lors de son imprégnation, et, de façon à ce que l'imprégnation soit la plus homogène et la plus rapide possible.

Le bac d'imprégnation est chauffé, selon l'exemple, par un dispositif de bain thermostaté 17 à eau ou à huile qui permet de réguler en température le bac d'imprégnation, le chauffage étant complété, au niveau d'un rouleau encreur 18 plongeant dans le bac d'imprégnation et en contact avec les fils pour réaliser l'imprégnation 1 des filaments des fils, par un dispositif de chauffage à air chaud 16.

En aval du bac d'imprégnation, le dispositif comporte des moyens 17, de refroidissement des fils imprégnés, qui sont disposés entre le bac d'imprégnation 11 et le mandrin de bobinage 12.

Ces moyens de refroidissement 17 sont, comme il a été vu plus haut, constitués par un tunnel de refroidissement assurant un refroidissement rapide du fil en cours de bobinage.

Le tunnel est préférablement dimensionné pour que, à la vitesse maximale de bobinage, la température du fil en sortie du tunnel de refroidissement soit la température ambiante.

Pour délivrer la résine, le dispositif comporte une unité d'injection/dosage 19 pourvue d'un doseur multi-composants et d'un canal 20 d'injection de la résine dans le bac d'imprégnation 11.

L'utilisation d'une unité d'injection pourvue d'un doseur multi-composants permet de mélanger les divers composants de la résine en fonction de la consommation de résine dans le bac.

Ce dernier est avantageusement pourvu d'un contrôleur de niveau permettant de réguler le débit de résine injectée en fonction de la consommation du dispositif.

De cette façon, la résine n'a pas le temps d'évoluer pendant l'imprégnation ce qui permet de travailler sur de longues périodes en continu.

La résine peut éventuellement être préchauffée dans l'unité d'injection/dosage en vue de son injection dans le bac.

Le dispositif de la figure 2 comporte en outre un système 21 de rattrapage de boucles et plusieurs poulies disposées pour assurer le cheminement du fil et une tension constante du fil déposé malgré les variations de vitesse de dépose liées à la forme à réaliser.

Le procédé de bobinage filamentaire est en particulier réalisé en continu et la figure 3 représente la fin du dispositif, à savoir les moyens de bobinage qui comportent un dispositif mécanique 30, 33 de déplacement du point de dépose du fil et le mandrin 14.

La partie gauche de la figure 3 représente un bobinage de type enroulement hélicoïdal 31, permettant d'obtenir une tenue longitudinale du réservoir, et la partie droite un enroulement de type circonférentiel 32, très favorable à la tenue en pression interne d'un réservoir.

Le fil est préférablement déposé sous forme de mèche plate sans torsion.

Le procédé a permis notamment de réaliser des bouteilles d'essai d'éclatement.

La fibre utilisée pour cette réalisation est une fibre dénommée T700 24K de la société Toray et la résine une résine époxy de classe 180°C de référence de base LMB 6458 de la société Huntsman, comprenant des composants référencés LMB 6459 (100pp) et LY 556 (50pp).

Cette base est catalysée avec un catalyseur XB 3515 à raison de 22pp de catalyseur pour 100pp de base.

L'imprégnation a été faite à 75°C dans le bac d'imprégnation.

La bouteille de 6,8l a été fabriquée sur un film (liner) en matière plastique selon les enroulements suivants:
1 enroulement circonférentiel, 2 enroulements longitudinaux, 1 enroulement circonférentiel, 2 enroulements longitudinaux et 1 enroulement circonférentiel.

Lors du bobinage, la bouteille est mise sous pression de 1,5 à 2,5 bars et une fois la bouteille réalisée elle est mise sous étuve en rotation pour la polymérisation de la résine selon un cycle approprié à la résine choisie.

Les tests d'éclatement ont révélé une pression d'éclatement entre 320 et 330 bars ce qui correspond à un rendement de fibre compris entre 77 et 79%.

Ce résultat est tout à fait comparable à celui obtenu par un procédé utilisant des fibres pré-imprégnées et notamment une même fibre T700 imprégnée avec une résine M10 de la société Hexcel.

L'invention concerne aussi un dispositif de bobinage de tubes de grande longueur et les tubes résultants.

Un exemple de dispositif de bobinage de tubes de grande longueur est donné en figure 5.

Le mandrin doit être suffisamment résistant pour ne pas se déformer et, pour que le bobinage soit de bonne qualité, la flèche du mandrin ne doit pas dépasser environ 5mm pour une portée de mandrin de 10m.

Le mandrin 14 sur lequel sera bobiné le tube est fixé à un bout sur une poupée de tour 26 et entraîné en rotation par un moteur dont le volant 27 est visible sur la figure.

Le mandrin repose sur un système support à rouleaux dont un rouleau 24 au moins est monté sur ressorts et qui comporte un bâti 25 et un pied 29 comme représenté en figure 5.

Le système à rouleaux est pourvu d'un degré de liberté pour permettre aux rouleaux de rester parallèles au tube lors du bobinage.

De même, les rouleaux sont agencés pour assurer une pression contrôlée sur la pièce en cours de bobinage alors même que le diamètre de la pièce augmente au fur et à mesure du dépôt des couches de fils de fibres.

Il est nécessaire que les rouleaux puissent être appliqués sur les fils en cours de bobinage.

Le cas des tubes de grandes longueurs est donc un cas typique pour lequel l'utilisation d'un procédé humide n'est pas appropriée, du fait que la fabrication de tels tubes nécessite la présence de supports ou de rouleaux pour soutenir le mandrin et le tube en cours de réalisation, et, du fait que le procédé humide d'une part conduirait à un essorage des fibres au contact des rouleaux et, d'autre part, conduirait à un positionnement incontrôlé des fibres déplacées par ces rouleaux.

En outre, tenter de réduire le taux de résine du procédé humide n'est pas une solution envisageable car, si le taux de résine est diminué au-dessous de 25%, les propriétés mécaniques du matériau se dégradent du fait que les filaments de fibres des fils ne sont plus assez liés entre eux.

Il est donc traditionnellement établi dans le métier du bobinage que seul le procédé utilisant des fibres pré-imprégnées est adapté à réaliser de tels tubes.

Contrairement à cette idée traditionnelle, avec le procédé selon la présente invention, le bobinage de fils circonférentiels et longitudinaux à partir de fils réalisés à partir de filaments de fibres sèches peut être employé sans problème sur des tubes de grande longueur reposant sur des rouleaux et avec un taux de résine inférieur à 35%.

Dans ce cadre, de préférence, les étapes de d'adaptation de viscosité et d'augmentation de viscosité sont réglées pour obtenir une imprégnation avec un taux de résine de 30 à 35%, adapté à la réalisation de tubes de grande longueur de hautes performances à partir d'un composite bobiné imprégné d'une résine thermodurcissable.

La qualité de dépose obtenue est semblable à celle obtenue avec un pré-imprégné, en particulier la dépose se fait sans effilochage des fibres qui traduirait une détérioration de ces fibres.

Le procédé de l'invention permet donc d'éviter l'emploi de fibres pré-imprégnées onéreuses pour bobiner des réservoirs ou des tubes de grande longueur tout en conservant une qualité de bobinage de grande précision qui ne peut être obtenue avec le procédé humide de base.

L'invention ne se limite pas aux exemples représentés et notamment, une installation de bobinage selon l'invention peut comprendre le traitement de plusieurs fils en parallèle pour constituer une nappe de bobinage contentant jusqu'à plusieurs dizaines de fils.

## Revendications

1. - Procédé de bobinage filamentaire comportant une étape (4) de déroulement de fils (12) formés à partir de filaments de fibres, une étape (1) d'imprégnation des fils par de la résine (13) et une étape (2) de bobinage, **caractérisé en ce que** la résine étant une résine thermodurcissable, il comporte une étape (3) d'adaptation de viscosité de la résine en vue de l'étape d'imprégnation (1) réalisée sans provoquer d'avancement de la polymérisation de la résine (13), **en ce que** l'étape d'imprégnation est réalisée sur les fils après déroulement avec une résine non polymérisée, fluidifiée par ladite étape (3) d'adaptation de la viscosité, et **en ce qu'**il comporte une étape (5) d'augmentation de viscosité de la résine entre l'étape d'imprégnation (1) et l'étape de bobinage (2) par le mandrin entraîné en rotation.

2. - procédé de bobinage filamentaire selon la revendication 1 pour lequel, pour l'étape d'adaptation de viscosité (3), on part d'une résine de forte viscosité que l'on chauffe (15, 16), à partir de la température ambiante, à une température au-dessous de la température de début de polymérisation de la résine pour la fluidifier et la rendre compatible avec l'imprégnation de filaments.

3. - procédé de bobinage filamentaire selon la revendication 1 ou 2 pour lequel l'étape d'augmentation de viscosité (5) comporte une étape de refroidissement rapide des fils imprégnés (12').

4. - procédé de bobinage filamentaire selon la revendication 3 pour lequel le refroidissement augmente la viscosité de la résine à une valeur adaptée au dépôt de fils imprégnés notamment une valeur de viscosité de l'ordre de 500 000 mPa.s à 1 000 000 mPa.s.

5. - procédé de bobinage filamentaire selon la revendication 3 ou 4 pour lequel le refroidissement est adapté à stopper tout début de polymérisation de la résine.

6. - procédé de bobinage filamentaire selon l'une des revendications précédentes pour lequel la résine est une résine d'une viscosité de l'ordre de 500 000 mPa.s à 1 000 000 mPa.s à température ambiante.

7. - procédé de bobinage filamentaire selon l'une des revendications précédentes pour lequel la résine est une résine d'une viscosité inférieure ou égale à 2000 mPa.s à une température supérieure ou égale à 30°C.

8. - procédé de bobinage filamentaire selon la revendication 7 pour lequel la résine est une résine d'une viscosité inférieure ou égale à 2000 mPa.s à une température supérieure ou égale à 70°C.

9. - procédé de bobinage filamentaire selon la revendication 8 pour lequel la résine est une résine d'une viscosité de l'ordre de 500 000 mPa.s à la température ambiante.

10. - procédé de bobinage filamentaire selon l'une des revendications précédentes pour lequel l'étape d'adaptation de la viscosité de la résine consiste à porter la résine à une température de l'ordre de 30 à 80°C pour la fluidifier.

11. - procédé de bobinage filamentaire selon la revendication 10 pour lequel l'étape d'adaptation de la viscosité de la résine consiste à porter la résine à une température de l'ordre de 70°C à 75°C.

12. - procédé de bobinage filamentaire selon l'une des revendications précédentes **caractérisé en ce qu'**il est réalisé en continu.

13. - procédé de bobinage filamentaire pour lequel la résine est une résine époxy de classe 180°C.

14. - dispositif de bobinage filamentaire à partir de fils secs réalisés à partir de filaments de fibres sèches, comportant une bobine (10) d'alimentation en fils secs, un bac (11), d'imprégnation des fils par de la résine (13), disposé en sortie de la bobine d'alimentation et un mandrin de bobinage (12), pour réaliser le procédé selon la revendication 1 **caractérisé en ce que** le bac d'imprégnation (11) est chauffé et **en ce que** des moyens (17) de refroidissement des fils imprégnés sont disposés entre le bac d'imprégnation (11) et le mandrin de bobinage (12).

15. - dispositif selon la revendication 14 pour lequel les moyens de refroidissement (17) sont constitués par un tunnel de refroidissement.

16. - dispositif selon la revendication 14 ou 15 **caractérisé en ce que** l'imprégnation (1) des fils est réalisée avec un rouleau encreur (18) plongeant dans le bac d'imprégnation et en contact avec les filaments.

17. - dispositif selon l'une des revendications 14 à 16 **caractérisé en ce qu'**il comporte une unité d'injection/dosage (19) pourvue d'un doseur multicomposants et d'un canal (20) d'injection de la résine dans le bac d'imprégnation (11).

18. - dispositif selon l'une des revendications 14 à 17 **caractérisé en ce qu'**il comporte un module de préchauffage 22 des fils secs 12 avant imprégnation.

## Claims

1. Filament winding method comprising a step (4) of paying out yarns (12) formed from fibre filaments, a step (1) of impregnating the yarns with resin (13) and a winding step (2), **characterized in that**, since the resin is a thermosetting resin, the method includes a step (3) of adapting the viscosity of the resin for the purpose of the impregnation step (1) carried out without the curing of the resin (13) being hastened, **in that** the impregnation step is carried out on the paidout yarns with an uncured resin, which is fluidized by said viscosity-adapting step (3), and **in that** it includes a step (5) of increasing the viscosity of the resin between the impregnation step (1) and the winding step (2) performed by the rotationally driven mandrel.

2. Filament winding method according to Claim 1, in which the viscosity-adapting step (3) starts with a high-viscosity resin which is heated (15, 16) from room temperature to a temperature below the curing onset temperature of the resin in order to fluidize it and make it compatible with the filament impregnation.

3. Filament winding method according to Claim 1 or 2, in which the viscosity-increasing step (5) comprises a step of rapidly cooling the impregnated yarns (12').

4. Filament winding method according to Claim 3, in which the cooling increases the viscosity of the resin to a value suitable for depositing impregnated yarns, especially to a viscosity ranging from around 500 000 mPa.s to 1 000 000 mPa.s.

5. Filament winding method according to Claim 3 or 4, in which the cooling is suitable for stopping any onset of resin cure.

6. Filament winding method according to one of the preceding claims, in which the resin is a resin having a viscosity ranging from around 500 000 mPa.s to 1 000 000 mPa.s at room temperature.

7. Filament winding method according to one of the preceding claims, in which the resin is a resin having a viscosity not exceeding 2 000 mPa.s at a temperature of 30°C or above.

8. Filament winding method according to Claim 7, in which the resin is a resin having a viscosity not exceeding 2 000 mPa.s at a temperature of 70°C or above.

9. Filament winding method according to Claim 8, in which the resin is a resin having a viscosity of around 500 000 mPa.s at room temperature.

10. Filament winding method according to one of the preceding claims, in which the step of adapting the viscosity of the resin consists in heating the resin to a temperature of around 30 to 80°C in order to fluidize it.

11. Filament winding method according to Claim 10, in which the step of adapting the viscosity of the resin consists in heating the resin to a temperature of around 70 to 75°C.

12. Filament winding method according to one of the preceding claims, **characterized in that** it is carried out continuously.

13. Filament winding method, in which the resin is a Class H (180°C) epoxy resin.

14. Filament winding device using dry yarns produced from dry fibre filaments, comprising a reel (10) for the supply of dry yarns, a tank (11), for impregnating the yarns with resin (13), said tank being placed downstream of the supply reel, and a winding mandrel (14) for carrying out the method according to Claim 1, **characterized in that** the impregnation tank (11) is heated and **in that** the means (17) for cooling the impregnated yarns are placed between the impregnation tank (11) and the winding mandrel (14).

15. Device according to Claim 14, in which the cooling means (17) consist of a cooling tunnel.

16. Device according to Claim 14 or 15, **characterized in that** the impregnation (1) of the yarns is carried out with an inking roller (18) immersed in the impregnation tank and in contact with the filaments.

17. Device according to one of Claims 14 to 16, **characterized in that** it includes an injection/metering unit (19) provided with a multi-component metering injector and a channel (20) for injecting the resin into the impregnation tank (11).

18. Device according to one of Claims 14 to 17, **characterized in that** it includes a preheating module 22 for preheating the dry yarns 12 before they are impregnated.

## Patentansprüche

1. Fadenwickelverfahren, das einen Schritt (4) des Abwickelns von ausgehend von Faserfilamenten geformten Fäden (12), einen Schritt (1) des Imprägnierens der Fäden mit Harz (13) und einen Wickelschritt (2) aufweist, **dadurch gekennzeichnet, dass** es, da das Harz ein wärmehärtbares Harz ist, einen Schritt (3) der Viskositätsanpassung des Harzes für den Imprägnierschritt (1) aufweist, der durchgeführt wird, ohne einen Fortschritt der Polymerisierung des Harzes (13) hervorzurufen, und dass der Imprägnierschritt an den Fäden nach dem Abwickeln mit einem nicht polymerisierten Harz durchgeführt wird, das durch den Schritt (3) der Anpassung der Viskosität verflüssigt wurde, und dass es einen Schritt (5) der Viskositätserhöhung des Harzes zwischen dem Imprägnierschritt (1) und dem Wickelschritt (2) durch den in Drehung versetzte Dorn enthält.

2. Fadenwickelverfahren nach Anspruch 1, bei dem für den Viskositätsanpassungsschritt (3) von einem Harz hoher Viskosität ausgegangen wird, das ausgehend von der Umgebungstemperatur auf eine Temperatur unterhalb der Temperatur des Polymerisierungsbeginns des Harzes erwärmt wird (15, 16), um es zu verflüssigen und mit der Imprägnierung von Filamenten kompatibel zu machen.

3. Fadenwickelverfahren nach Anspruch 1 oder 2, bei dem der Schritt der Viskositätserhöhung (5) einen Schritt der schnellen Kühlung der imprägnierten Fäden (12') aufweist.

4. Fadenwickelverfahren nach Anspruch 3, bei dem das Kühlen die Viskosität des Harzes auf einen Wert erhöht, der für das Aufbringen imprägnierter Fäden geeignet ist, insbesondere einen Viskositätswert in der Größenordnung von 500 000 mPa.s bis 1 000 000 mPa.s.

5. Fadenwickelverfahren nach Anspruch 3 oder 4, bei dem das Kühlen geeignet ist, um jeden Polymerisierungsbeginn des Harzes zu stoppen.

6. Fadenwickelverfahren nach einem der vorhergehenden Ansprüche, bei dem das Harz ein Harz mit einer Viskosität in der Größenordnung von 500 000 mPa.s bis 1 000 000 mPa.s bei Umgebungstemperatur ist.

7. Fadenwickelverfahren nach einem der vorhergehenden Ansprüche, bei dem das Harz ein Harz mit einer Viskosität geringer als oder gleich 2000 mPa.s bei einer Temperatur höher als oder gleich 30°C ist.

8. Fadenwickelverfahren nach Anspruch 7, bei dem das Harz ein Harz mit einer Viskosität geringer als oder gleich 2000 mPa.s bei einer Temperatur höher als oder gleich 70°C ist.

9. Fadenwickelverfahren nach Anspruch 8, bei dem das Harz ein Harz mit einer Viskosität in der Größenordnung von 500 000 mPa.s bei Umgebungstemperatur ist.

10. Fadenwickelverfahren nach einem der vorhergehenden Ansprüche, bei dem der Schritt der Anpassung der Viskosität des Harzes darin besteht, das Harz auf eine Temperatur in der Größenordnung von 30 bis 80°C zu bringen, um es zu verflüssigen.

11. Fadenwickelverfahren nach Anspruch 10, bei dem der Schritt der Anpassung der Viskosität des Harzes darin besteht, das Harz auf eine Temperatur in der Größenordnung von 70°C bis 75°C zu bringen.

12. Fadenwickelverfahren nach einem der vorhergehenden Ansprüche, **dadurch gekennzeichnet, dass** es kontinuierlich durchgeführt wird.

13. Fadenwickelverfahren, bei dem das Harz ein Epoxidharz der Klasse 180°C ist.

14. Vorrichtung zum Fadenwickeln ausgehend von trockenen Fäden, die ausgehend von Filamenten von trockenen Fasern hergestellt werden, die eine Spule (10) zur Zufuhr von trockenen Fäden, einen Behälter (11) zum Imprägnieren der Fäden mit Harz (13), der am Ausgang der Zufuhrspule angeordnet ist, und einen Haspeldorn (14) aufweist, um das Verfahren nach Anspruch 1 durchzuführen, **dadurch gekennzeichnet, dass** der Imprägnierbehälter (11) erwärmt wird, und dass Einrichtungen (17) zur Kühlung der imprägnierten Fäden zwischen dem Imprägnierbehälter (11) und dem Haspeldorn (14) angeordnet sind.

15. Vorrichtung nach Anspruch 14, bei der die Kühleinrichtungen (17) aus einem Kühltunnel bestehen.

16. Vorrichtung nach Anspruch 14 oder 15, **dadurch gekennzeichnet, dass** die Imprägnierung (1) der Fäden mit einer Auftragwalze (18) durchgeführt wird, die in den Imprägnierbehälter eintaucht und mit den Filamenten ist Kontakt ist.

17. Vorrichtung nach einem der Ansprüche 14 bis 16, **dadurch gekennzeichnet, dass** sie eine Injektions-/Dosiereinheit (19) aufweist, die mit einer Mehrkomponenten-Dosiereinrichtung und mit einem Kanal (20) zur Injektion des Harzes in den Imprägnierbehälter (11) versehen ist.

18. Vorrichtung nach einem der Ansprüche 14 bis 17, **dadurch gekennzeichnet, dass** sie ein Vorwärmmodul (22) der trockenen Fäden (12) vor dem Imprägnieren aufweist.
